# EUROPÄISCHE PATENTSCHRIFT

(11) **EP 3 335 022 B1**
(45) Veröffentlichungstag und Bekanntmachung des Hinweises auf die Patenterteilung: **07.08.2019**
(21) Anmeldenummer: 16750451.3
(22) Anmeldetag: 12.08.2016
(51) Int. Cl.: G01L 25/00, G01M 15/02

(54) **ANORDNUNG ZUM KALIBRIEREN EINER DREHMOMENT-MESSEINRICHTUNG**
ARRANGEMENT FOR CALIBRATING A TORQUE-MEASURING DEVICE
DISPOSITIF D'ÉTALONNAGE D'UN INSTRUMENT DE MESURE DE COUPLE DE ROTATION

(30) Priorität: 13.08.2015 AT 5352015
(43) Veröffentlichungstag der Anmeldung: 20.06.2018
(73) Patentinhaber: AVL List GmbH, 8020 Graz (AT)
(72) Erfinder: SCHABINER, Christian, 8403 Lebring (AT); HOFER, Manfred, 8073 Feldkirchen bei Graz (AT); SCHOCHLOW, Andreas, 64354 Reinheim (DE); PÄTSCHKE, Klaus, 68642 Bürstadt (DE); AUMÜLLER, Bernhard, 8063 Hart-Purgstall (AT); ABRAHAM, Thomas, 8051 Graz (AT); SCHMIDT, Joachim, 8402 Werndorf (AT)
(74) Vertreter: Patentanwälte ter Smitten Eberlein-Van Hoof Rütten Partnerschaftsgesellschaft mbB
(86) Internationale Anmeldenummer: PCT/EP2016/069225
(87) Internationale Veröffentlichungsnummer: WO 2017/025623

(56) Entgegenhaltungen:
- EP-A1- 0 517 592
- EP-A2- 2 397 832
- CN-A- 103 969 043
- DE-A1-102006 055 614
- DE-A1-102007 040 106

## Beschreibung

Die Erfindung betrifft eine Anordnung gemäß Oberbegriff des unabhängigen Patentanspruchs.

Insbesondere betrifft die Erfindung eine Anordnung, die bei der Kalibrierung einer Drehmoment-Messeinrichtung verwendet werden kann, wobei die Drehmoment-Messeinrichtung bevorzugt eine Drehmoment-Messeinrichtung eines Kraftfahrzeugprüfstandes oder eines Motorenprüfstandes ist.

Motorenprüfstände sind bekannte Vorrichtungen, die in der Regel eine Eingangswelle, eine mit der Eingangswelle gekoppelte Drehmoment-Messeinrichtung und eine Belastungsmaschine umfassen. Bei einem herkömmlichen Motorenprüfstandsaufbau wird die über eine Kupplung mit der Eingangswelle des Prüfstandes gekoppelte Antriebsmaschine angetrieben und dabei durch die Belastungsmaschine des Prüfstandes belastet. Das zwischen der Belastungsmaschine und der Antriebsmaschine wirkende Drehmoment wird über die Drehmoment-Messeinrichtung des Prüfstands gemessen und gegebenenfalls bei der Auswertung von erfassten Messdaten berücksichtigt.

Aufgrund immer höherer Anforderungen an die Messgenauigkeit und die Reproduzierbarkeit der Prüfstandsmessungen, ist es erforderlich, die Messgenauigkeit der Drehmoment-Messeinrichtung bzw. des Prüfstandes zu erhöhen. Ein wichtiger Faktor bei der Erhöhung der Messgenauigkeit ist die Kalibrierung der Drehmoment-Messeinrichtung des Prüfstandes.

Gemäß Stand der Technik gibt es unterschiedliche Möglichkeiten zur Kalibrierung der Drehmoment-Messeinrichtung. Beispielsweise kann an der Eingangswelle des Prüfstands ein in etwa waagrecht abstehender Hebel mit einer vordefinierten Länge angebracht werden. An diesem Hebel können in weiterer Folge Gewichte angebracht werden, die über die bekannte Hebellänge ein definiertes Drehmoment an der Drehmoment-Messeinrichtung bewirken. Jedoch ist diese Methode in der Praxis umständlich und insbesondere aufgrund der auftretenden Querkräfte ungenau. Eine derartige Kalibriervorrichtung ist aus der EP 2 397 832 A2 oder der DE 10 2006 055 614 A1 bekannt, wobei in erstgenanntem Dokument Fehler bei der Messung dadurch verringert werden, dass sichergestellt wird, dass der Hebel horizontal an der Wirkachse angebracht wird.

Ferner ist es zur Verbesserung der Kalibriergenauigkeit bekannt, dass die Kalibriervorrichtung selbst einen Drehmomentsensor umfasst, dessen Messdaten zur Kalibrierung der Drehmoment-Messeinrichtung des Prüfstandes herangezogen werden können. Dies ist beispielsweise aus der DE 10 2007 040 106 A1 bekannt, in der das Drehmoment durch einen Elektromotor erzeugt wird.

Zur Verbesserung dieses Systems wird gemäß Stand der Technik vorgeschlagen, die notwendige Referenzkraft zur Erzeugung des Referenzdrehmoments über Druckluftzylinder auf den Hebel zu übertragen. Nachteilig an diesen bekannten Konstruktionen ist, dass durch Druckluftzylinder nur relativ geringe Kräfte erzeugt werden können. Um dennoch ein für den Prüfstand ausreichend großes Drehmoment zu erzeugen, muss der mit der Eingangswelle gekoppelte Hebel daher relativ lang sein, wodurch die Kompaktheit der Kalibriervorrichtung verschlechtert wird.

Darüber hinaus tritt bei herkömmlichen Druckluftzylindern, jedoch auch bei herkömmlichen Hydraulikzylindern, der sogenannte "Stick-Slip-Effekt" auf. Dieser Effekt betrifft das bekannte technische Problem, dass zur Bewegung des Betätigungselements eines Aktuators aus der Ruhelage die Haftreibung, insbesondere die beim Anfahren des Aktuators aus einer Ruhestellung auftretende "Anfahrhaftreibung" überwunden werden muss. Da die Haftreibungskräfte bekanntlich größer sind als die Gleitreibungskräfte, kommt es nach dem Überwinden der Haftreibung zu einer ruckartigen Bewegung, die oft zu einem unerwünschten überschießenden Bewegungsablauf des Aktuators führt.

Somit besteht bei Anordnungen zum Kalibrieren von Drehmoment-Messeinrichtungen ein Zielkonflikt zwischen:
- der Genauigkeit des erzeugbaren Referenz-Drehmoments,
- der Größe des maximal erzeugbaren Drehmoments
- und der Praktikabilität der Anwendung, insbesondere der Kompaktheit und der Anwenderfreundlichkeit der Anordnung.

Aufgabe der Erfindung ist es nun, diesen Zielkonflikt zu lösen.

Die erfindungsgemäße Aufgabe wird insbesondere durch die Merkmalskombination des unabhängigen Patentanspruchs gelöst.

Gegebenenfalls betrifft die Erfindung eine Anordnung zum Kalibrieren einer Drehmoment-Messeinrichtung eines Kraftfahrzeugprüfstandes oder Motorenprüfstandes umfassend eine Referenzmomenterzeugungseinrichtung zur Erzeugung eines um eine Wirkachse wirkenden Referenz-Drehmoments, eine Referenzmomentmesseinrichtung zur Messung des um die Wirkachse wirkenden Referenz-Drehmoments, und eine Verbindungsvorrichtung zur Verbindung oder Drehverbindung der Anordnung mit der Drehmoment-Messeinrichtung und zur Übertragung des Referenz-Drehmoments auf die Drehmoment-Messeinrichtung.

Es ist vorgesehen, dass die Referenzmomenterzeugungseinrichtung mindestens einen anfahrhaftreibungsfrei betätigbaren Aktuator mit einem anfahrhaftreibungsfrei betätigbaren Antriebsglied zur Erzeugung einer Referenzkraft aufweist und dass die Referenzmomenterzeugungseinrichtung mindestens einen um die Wirkachse als Kurbel oder Nocke wirkenden Fortsatz umfasst, wobei die Referenzkraft des Aktuators zur Erzeugung des Referenz-Drehmoments beabstandet von der Wirkachse auf den Fortsatz wirkt.

Gegebenenfalls ist vorgesehen, dass der Aktuator der Referenzmomenterzeugungseinrichtung einen Grundkörper, ein Betätigungselement und mindestens ein anfahrhaftreibungsfrei betätigbares Antriebsglied zur Bewegung des Betätigungselements gegenüber dem Grundkörper und zur Erzeugung der Referenzkraft durch elastisches Verformen des Antriebsglieds umfasst.

Gegebenenfalls ist vorgesehen, dass der Aktuator eine auf das Antriebsglied wirkende Druckkammer umfasst, und dass in der Druckkammer ein Fluid, insbesondere ein Hydraulikfluid, mit steuerbarem oder regelbarem Fluiddruck zur elastischen Verformung des Antriebsglieds und zur Betätigung des Aktuators vorgesehen ist.

Gegebenenfalls ist vorgesehen, dass der Aktuator oder das Antriebsglied die funktionelle Struktur eines Membranantriebs, eines Membranzylinders, eines einfachen Balgzylinders, eines Doppelbalgzylinders, eines Mehrfachbalgzylinders oder eines Faltenbalgzylinders aufweist, wobei die der funktionellen Struktur der Membran(en) oder des Balgs entsprechenden Komponenten aus einem elastisch verformbaren aber festen und formastabilen Werksstoff wie Metall oder Stahl gebildet ist oder sind.

Gegebenenfalls ist vorgesehen, dass das Antriebsglied mindestens eine elastisch verformbare erste Platte umfasst, wobei die erste Platte die Druckkammer zumindest teilweise begrenzt und wobei die Form der ersten Platte und der Druckkammer zur Betätigung des Aktuators durch Veränderung des Fluiddrucks in der Druckkammer veränderbar ist.

Gegebenenfalls ist vorgesehen, dass das Antriebsglied eine elastisch verformbare erste Platte und eine elastisch verformbare zweite Platte umfasst, wobei die beiden Platten zusammen ein Plattenpaar bilden, dass die erste Platte und die zweite Platte entlang einer geschlossenen Kontur dichtend miteinander verbunden sind, dass die erste Platte und die zweite Platte die Druckkammer derart begrenzen, dass sich die Druckkammer zwischen die erste Platte und die zweite Platte erstreckt, und dass die Form der ersten Platte, der zweiten Platte und der Druckkammer zur Betätigung des Aktuators durch Veränderung des Fluiddrucks in der Druckkammer veränderbar ist.

Gegebenenfalls ist vorgesehen, dass der zwischen der ersten Platte und der zweiten Platte angeordnete Abschnitt der Druckkammer flach ausgebildet ist und entlang des Verlaufs der Platten eine größere Abmessung aufweist als quer oder normal zum Verlauf der Platten, und dass dadurch die funktionelle Struktur eines Balgzylinders, insbesondere die funktionelle Struktur eines einfachen Balgzylinders oder eines einfachen Faltenbalgzylinders gebildet ist.

Gegebenenfalls ist vorgesehen, dass der Aktuator zwei oder mehr Plattenpaare umfasst, die jeweils einen Abschnitt der Druckkammer umgeben, dass die Plattenpaare quer zum Verlauf der Platten seriell aneinandergereiht sind, und dass dadurch die funktionelle Struktur eines Balgzylinders, insbesondere die funktionelle Struktur eines Doppelbalgzylinders, eines Mehrfachbalgzylinders oder eines Faltenbalgzylinders gebildet ist.

Gegebenenfalls ist vorgesehen, dass ein Regelkreis zur Regelung des Referenz-Drehmoments vorgesehen ist, wobei die Führungsgröße oder der Sollwert ein wählbarer oder von einer Kalibrierkurve vorgegebener Drehmomentwert ist, wobei der im Regelkreis rückgeführte Ist-Wert ein von der Referenzmomentmesseinrichtung gemessener Wert, und insbesondere das gemessene Drehmoment ist, und wobei die Stellgröße oder die Steuergröße ein Signal zur Veränderung des Drucks in einer oder in der Druckkammer ist.

Gegebenenfalls ist vorgesehen, dass zur Steuerung oder Regelung des Fluiddrucks der Druckkammer eine Druckaufbauvorrichtung, wie insbesondere eine Fluidpumpe und ein Absperrelement, vorgesehen ist.

Gegebenenfalls ist vorgesehen, dass das Absperrelement als über Pulsweitenmodulation angesteuertes Digitalventil ausgebildet ist.

Gegebenenfalls ist vorgesehen, dass die Anordnung und der Aktuator einen ersten Zustand aufweisen, bei dem ein erstes Referenz-Drehmoment auf die Drehmoment-Messeinrichtung übertragen ist, dass die Anordnung und der Aktuator einen zweiten Zustand aufweisen, bei dem ein zweites Referenz-Drehmoment auf die Drehmoment-Messeinrichtung übertragen ist, und dass das Referenz-Drehmoment beim Übergang zwischen dem ersten Zustand auf den zweiten Zustand zu jedem Zeitpunkt zwischen dem ersten Referenz-Drehmoment und dem zweiten Referenz-Drehmoment liegt.

Gegebenenfalls ist vorgesehen, dass ein Referenzantriebsstrang vorgesehen ist, und dass die Referenzmomenterzeugungseinrichtung, die Referenzmomentmesseinrichtung und die Verbindungsvorrichtung nacheinander, insbesondere in dieser Reihenfolge nacheinander, entlang des vom Aktuator ausgehenden Kraftflusses am Referenzantriebsstrang angeordnet sind.

Gegebenenfalls ist vorgesehen, dass die Referenzmomenterzeugungseinrichtung zwei anfahrhaftreibungsfrei betätigbare Aktuatoren umfasst, deren Referenzkräfte zur Wahl der Wirkrichtung des Referenz-Drehmoments wahlweise oder gleichzeitig beabstandet von der Wirkachse auf gegenüberliegende Seiten des Fortsatzes wirken.

Gegebenenfalls ist vorgesehen, dass die Referenzmomenterzeugungseinrichtung zwei um die Wirkachse als Kurbeln oder Nocken wirkende Fortsätze umfasst, wobei die Fortsätze etwa 180° um die Wirkachse zueinander verdreht angeordnet sind, dass die Referenzmomenterzeugungseinrichtung vier anfahrhaftreibungsfrei betätigbare Aktuatoren umfasst, deren Referenzkräfte zur Wahl der Wirkrichtung des Referenz-Drehmoments jeweils paarweise beabstandet von der Wirkachse auf die beiden Fortsätze wirken.

Gegebenenfalls ist vorgesehen, dass die Anordnung als mit der Drehmoment-Messeinrichtung des Kraftfahrzeugprüfstandes oder des Motorenprüfstandes koppelbares Modul ausgebildet ist, wobei ein Grundgestell zur ortsfesten Festlegung oder zur Festlegung an einer Komponente des Kraftfahrzeugprüfstandes oder des Motorenprüfstandes vorgesehen ist.

Gegebenenfalls ist vorgesehen, dass die Verbindungsvorrichtung als koaxial und im Wesentlichen momentfrei und kraftfrei mit der Drehmoment-Messeinrichtung koppelbare Verbindungsvorrichtung, insbesondere als Kupplung oder Lamellenkupplung mit radialer und/oder axialer Verstellmöglichkeit ausgebildet ist.

Die Anordnung ist insbesondere zur teilautomatischen und/oder vollautomatischen Kalibrierung einer Drehmoment-Messeinrichtung an einem Kraftfahrzeugprüfstand oder an einem Motorenprüfstand geeignet und/oder eingerichtet. Jedoch kann die Anordnung gegebenenfalls auch zur Kalibrierung einer Drehmoment-Messeinrichtung in einer Versuchsanordnung, also unabhängig von einem Prüfstand eingesetzt werden.

Die Anordnung ist insbesondere dadurch gekennzeichnet, dass die Referenzmomenterzeugungseinrichtung mindestens einen im Wesentlichen anfahrhaftreibungsfrei betätigbaren Aktuator mit einem im Wesentlichen anfahrhaftreibungsfrei betätigbaren Antriebsglied umfasst.

Ein anfahrhaftreibungsfrei betätigbarer Aktuator ist insbesondere ein Aktuator, bei dem im Wesentlichen kein Stick-Slip-Effekt auftritt. Grundsätzlich entspricht die Bezeichnung "anfahrhaftreibungsfrei" in allen Ausführungsformen der Bezeichnung "haftreibungsfrei", wobei zur Verbesserung der Klarheit durch die Bezeichnung "anfahrhaftreibungsfrei" definiert ist, dass der verwendete Aktuator weitestgehend von jener Haftreibung befreit ist, die normalerweise beim Anfahren, also bei einer Lageänderung eines Betätigungselements aus einer Ruheposition auftritt.

Bevorzugt ist vorgesehen, dass der Aktuator ein Betätigungselement umfasst, das durch elastisches Verformen eines Antriebsglieds gegenüber einem Grundkörper bewegt werden kann. Bei dieser Bewegung durch elastisches Verformen tritt im Gegensatz zur Bewegung herkömmlicher Pneumatikzylinder keine Reibung zwischen zwei Körpern auf, womit auch keine Anfahrhaftreibung auftritt.

Elastisches Verformen im Sinne der Erfindung entspricht einem Verformen, das insbesondere reversibel rückgängig gemacht werden kann. Gegebenenfalls treten bei der elastischen Verformung leichte Kriecheffekte oder plastische Verformungen auf, die jedoch in einem so geringen Ausmaß bleiben, dass der Aktuator durch Betätigung des Antriebsglieds mehrmals oder beliebig oft in seine Ursprungsform zurückbewegt werden kann.

Gegebenenfalls weisen der Aktuator und/oder das Antriebsglied die funktionelle Struktur eines Membranantriebs, eines Membranzylinders, eines einfachen Balgzylinders, eines Doppelbalgzylinders, eines Mehrfachbalgzylinders oder eines Faltenbalgzylinders auf, wobei bevorzugt die der funktionellen Struktur der Membranen oder des Balgs entsprechenden Komponenten aus einem elastisch verformbaren aber festen und formstabilen Werkstoff, wie beispielsweise aus Metall oder aus Stahl gebildet sind.

Bei herkömmlichen Membran- oder Balgantrieben ist das Antriebsglied aus einer im Wesentlichen biegeschlaffen Membran, wie beispielsweise aus einer Elastomermembran gebildet. Derartige Materialien sind aber gegebenenfalls nicht zur Lösung der erfindungsgemäßen Aufgabe geeignet. Der Aktuator der vorliegenden Anordnung hingegen umfasst ein Antriebsglied, das bevorzugt aus einem festen und formstabilen Werkstoff oder aus mehreren festen und formstabilen Werkstoffen gebildet ist. Das Antriebsglied des Aktuators wirkt somit in seiner funktionellen Struktur, d.h. in seinem grundsätzlichen kinematischen Aufbau, wie eine herkömmliche Membran- oder Balganordnungen. Jedoch unterscheidet sich der konkrete Aufbau des erfindungsgemäßen Aktuators grundsätzlich von herkömmlichen Membran- oder Balganordnungen.

Insbesondere umfasst das Antriebsglied zumindest eine erste Platte. Diese Platte kann beispielsweise scheiben- oder tellerförmig ausgebildet sein und aus einem festen und formstabilen Material bestehen. Darüber hinaus begrenzt die erste Platte eine mit einem Fluid gefüllte Druckkammer. Wird nun der Druck des Fluids in der Druckkammer verändert, so wirkt dieser Druck auf die erste Platte. Dadurch kann die erste Platte verformt werden, wodurch eine Bewegung eines Betätigungselements bewirkt wird.

Gegebenenfalls umfasst das Antriebsglied eine zweite Platte. Auch diese zweite Platte kann tellerförmig oder scheibenförmig ausgebildet sein und aus einem festen und formstabilen Material bestehen.

Die erste Platte ist mit der zweiten Platte bevorzugt derart entlang einer geschlossenen Kontur dichtend verbunden, dass sich die Druckkammer zwischen die beiden Platten erstreckt. Beispielsweise sind zwei tellerförmige Platten mit ihren konkav ausgebildeten Seiten zueinander ausgerichtet und entlang einer geschlossenen Kontur, beispielsweise entlang ihres Randes, miteinander verschraubt oder verklemmt und abgedichtet. Bevorzugt ist die Druckkammer flach ausgebildet und weist entlang des Verlaufs der Platten eine größere Abmessung auf als quer zum Verlauf der Platten bzw. als entlang der Wirkrichtung des Aktuators. Insbesondere kann das Verhältnis der Abmessungen des flachen Abschnitts der Druckkammer, also das Verhältnis der Abmessung "entlang des Verlaufs der Platten" zur Abmessung "quer zum Verlauf der Platten bzw. entlang der Wirkrichtung des Aktuators" etwa 5-10, 10-20, 20-30 oder 30-60 betragen. Durch Erhöhung des Fluiddrucks in der Druckkammer kann die Wölbung der Platte oder der Platten verändert werden, wodurch das Betätigungselement gegenüber dem Grundkörper durch elastische Verformung des Antriebsglieds bewegt wird.

Die beiden Platten bilden bevorzugt ein Plattenpaar, wobei sich die Druckkammer bevorzugt zwischen die beiden Platten erstreckt. Gegebenenfalls umfasst ein Aktuator bzw. ein Antriebsglied mehrere, beispielsweise zwei, drei, vier oder mehr Plattenpaare, die entlang der Wirkrichtung des Aktuators seriell aneinander gereiht sind. Als seriell aneinander gereiht wird in diesem Zusammenhang eine Aneinanderreihung bezeichnet, bei der beispielsweise ein erstes Plattenpaar an einem zweiten Plattenpaar vorgesehen ist, sodass bei einer Betätigung des ersten Plattenpaars das gesamte zweite Plattenpaar mitbewegt wird. Durch Änderung des Fluiddrucks in der Druckkammer oder in den Druckkammern eines Aktuators addieren sich somit die Bewegungen der Plattenpaare.

Zur Veränderung des Fluiddrucks der Druckkammer ist bevorzugt eine Druckaufbauvorrichtung vorgesehen. Diese umfasst beispielsweise eine Fluidpumpe und ein Absperrelement. Über die Fluidpumpe kann der Fluiddruck erhöht werden. Durch eine Steuerung und/oder Regelung eines Absperrelements kann der erhöhte Fluiddruck an die Druckkammer abgegeben werden oder aus der Druckkammer abgeführt werden.

Bevorzugt ist ein Regelkreis zur Regelung des Fluiddrucks in der Druckkammer und/oder zur Regelung des von der Anordnung auf die Drehmoment-Messeinrichtung ausgeübten Drehmoments vorgesehen. Bevorzugt ist der Regelkreis derart ausgebildet, dass bei einem Übergang von einem ersten Drehmoment auf ein zweites Drehmoment das Drehmoment zu jedem Zeitpunkt zwischen dem ersten und dem zweiten Drehmoment liegt. Dies bedeutet insbesondere, dass beim Übergang von einem ersten Drehmoment auf ein zweites Drehmoment kein Überschwingen des Drehmoments auftritt. Dadurch ist die Genauigkeit der Anordnung weiter verbessert.

Die vorliegende Anordnung ist insbesondere dazu eingerichtet, bei einer Kalibrierung einer Drehmoment-Messeinrichtung für bis zu 10kNm eingesetzt zu werden. Für derart große Drehmomente kann es vorteilhaft sein, den Hebelarm, also den Fortsatz so kurz wie möglich zu halten. Dadurch müssen jedoch hohe Kräfte aufgebracht werden, um trotz des kurzen Hebelarms das gewünschte Referenzdrehmoment erzeugen zu können. Um das Referenzdrehmoment exakt wählen zu können, sollte die vom Aktuator ausgehende Referenzkraft in sehr feinen Schritten oder im Wesentlichen stufenlos steuerbar oder regelbar sein. Dies geschieht bei der vorliegenden Anordnung insbesondere durch eine Steuerung und/oder Regelung des Fluiddrucks in der Druckkammer des anfahrhaftreibungsfrei betätigbaren Aktuators. Dazu kann der Fluiddruck über schnell schaltbare Digitalventile gesteuert oder geregelt werden, wobei die Digitalventile bevorzugt über eine Pulsweitenmodulation angesteuert werden. Dadurch kann der Fluiddruck exakt dosiert werden, womit sich eine Mikroverstellung und eine Realisierung kleinster definierter Bewegungen des Betätigungselements erzielen lassen.

Bei der Pulsweitenmodulation (PWM) werden Digitalventile über ein PWM-Signal gesteuert, das zwar eine im Wesentlichen konstante Frequenz, aber eine veränderbare und insbesondere modulierbare Pulslänge aufweist. Dadurch wird im Gegensatz zu anderen Digitalsteuerungen, wie z.B. bei einer PCM-Steuerung, pro Steuerkante nur ein Digitalventil benötigt. Durch die Verringerung der Anzahl der Ventile kann die Komplexität der Anordnung verringert werden.

Auch die bei einer Steuerung über Proportionalventile oder über Servoventile auftretenden Nachteile, wie hoher Hydraulikflüssigkeitsbedarf, hoher Hydraulikflüssigkeitsdurchfluss, Hydraulikflüssigkeitsverlust, reibungsbedingte Erwärmung der Hydraulikflüssigkeit oder die Dehnung der relativ langen Verbindungsleitungen, können durch die über Pulsweitenmodulation gesteuerten Ventile überwunden werden, wodurch die Effizienz weiter verbessert wird.

Die größte Anregung des Hydrauliksystems tritt bei einer Pulsweite von etwa 50 % auf. Bei niedrigen Pulsweiten von etwa 0 % bis 10 % oder bei höheren Pulsweiten von etwa 90 % bis 100 % ist die Anregung der Pulsationen entsprechend geringer. Der Bereich niedriger Pulsweiten eignet sich besonders für eine hochgenaue Steuerung, bei der aber keine hohe Geschwindigkeit benötigt wird. Für hohe Geschwindigkeiten bei hoher Genauigkeit kann zusätzlich ein Proportionalventil vorgesehen sein.

Gemäß einer bevorzugten Ausführungsform können herkömmliche, schnell schaltende Ventile, insbesondere Umschaltventile oder Digitalventile, mit einer Schaltzeit von etwa 10ms verwendet werden. Im Gegensatz zu herkömmlichen Proportional- oder Servoventilen können durch die Verwendung der durch Pulsweitenmodulation gesteuerten Digitalventile der Druck in der Druckkammer und somit auch gegebenenfalls die Stellung des Aktuators oder das aufgebrachte Drehmoment unverändert gehalten werden, ohne dazu Energie aufwenden zu müssen. Auch dadurch kann die Effizienz der Anordnung verbessert werden. Als beispielhafte Ventile können Standardumschaltventile verwendet werden, die beispielsweise eine Schaltzeit von etwa 5ms bis 15ms, bevorzugt etwa 7ms bis 12ms oder 7ms bis 10ms aufweisen. Bevorzugt weisen die Ventile eine relativ geringe Nominaldurchflussrate von beispielsweise unter 10 l/min auf.

Durch die vorliegende Anordnung wird insbesondere auch der Vorteil bewirkt, dass ein relativ kleines Fluidvolumen ausreicht, um die notwendigen Kräfte zu erzeugen.

Gegebenenfalls können in allen Ausführungsformen die Aktuatoren mehrere Antriebsglieder umfassen, die seriell oder parallel aneinandergereiht sind, um eine Relativbewegung des Betätigungselements gegenüber dem Grundkörper zu bewirken. Gegebenenfalls kann ein Hebel eingesetzt werden, um eine Übersetzung der von dem Aktuator ausgehenden Referenzkraft zu der auf den Fortsatz wirkenden Referenzkraft zu bewirken.

Ferner kann durch Vergrößerung der Druckkammer quer zur Wirkrichtung des Aktuators, also durch Vergrößerung der Wirkfläche des Fluiddrucks das Verhältnis zwischen in der Druckkammer wirkendem Druck und der von dem Aktuator erzeugten Kraft gemäß bekannten physikalischen Zusammenhängen verändert werden.

Gegebenenfalls umfasst die Anordnung einen oder zwei im Wesentlichen waagrecht von der Wirkachse abstehende Hebel, die ähnlich dem Fortsatz als Kurbel oder als Nocke wirken können. An diesem Hebel können zur Nullung der Anordnung oder des gesamten Messaufbaus Justiergewichte angeordnet werden.

Bevorzugt ist in allen Ausführungsformen das Fluid ein Hydraulikfluid, wie beispielsweise ein Hydrauliköl.

Die Drehmoment-Messeinrichtung eines Prüfstands ist bei ihrem bestimmungsgemäßen Einsatz oft hohen dynamischen Kräften ausgesetzt, da die Drehmoment-Messeinrichtung gegebenenfalls als mitdrehende Drehmoment-Messeinrichtung ausgebildet ist. Beispielsweise wird als Drehmoment-Messeinrichtung ein sogenannter Drehmoment-Messflansch verwendet, der zwei durch das aufgebrachte Drehmoment in geringem Maße gegenübereinander verdrehte Körper umfasst, wobei die Verdrehung der beiden Körper gegenüber einander durch Sensoren, beispielsweise durch Dehnmessstreifen, detektiert und in einen Drehmomentmesswert umgewandelt wird. Bei der Kalibrierung wird hingegen bevorzugt lediglich ein statisches Drehmoment angelegt und gemessen, womit keine hohen Rotations- oder Trägheitskräfte wirken. Aus diesem Grund kann die Referenzmomentmesseinrichtung sensibler ausgebildet sein und kann dadurch eine höhere Messgenauigkeit aufweisen als die Drehmoment-Messeinrichtung eines Motorenprüfstandes.

Der als Kurbel oder als Nocke wirkende Fortsatz steht bevorzugt im Wesentlichen radial von der Wirkachse der Anordnung ab. Insbesondere ist der Fortsatz schwenk- oder drehbar angeordnet. Der Aktuator oder die Aktuatoren wirken auf den Fortsatz, um ihre Referenzkraft in ein Referenzdrehmoment umzuwandeln. Dabei wirkt die Referenzkraft des Aktuators entlang der Wirkrichtung des Aktuators. Diese ist bevorzugt in allen Ausführungsformen eine lineare Wirkrichtung. Der Aktuator und dessen Wirkrichtung sind insbesondere derart angeordnet, dass sie tangential zur Wirkachse der Anordnung auf den Fortsatz wirken.

Insbesondere verläuft die Wirkrichtung in einer Normalebene der Wirkachse und beabstandet von der Wirkachse.

Der Aktuator umfasst ein Betätigungselement, das gegenüber einem Grundkörper bewegt werden kann. Diese Bewegung geschieht insbesondere entlang der Wirkrichtung des Aktuators. Das Betätigungselement kann beispielsweise an jenem Bereich des Aktuators angeordnet sein, der in Wirkkontakt mit dem Fortsatz steht. Der Grundkörper ist insbesondere jener Teil des Aktuators, der mit dem Grundgestell der Anordnung verbunden ist. Die Referenzkraft wirkt somit zwischen dem Fortsatz und dem Grundgestell, wobei das Grundgestell gegenüber den Kräften über eine ortsfeste oder eine feste Verbindung mit dem Maschinengestell des Prüfstands abgestützt ist.

Der Fortsatz ist beispielsweise ein von einer Zwischenwelle abstehender Steg. Gegebenenfalls entfällt die Zwischenwelle, womit der Fortsatz direkt an einem Element der Drehmoment-Messeinrichtung der Anordnung angeordnet ist.

Bevorzugt ist der Grundkörper des Aktuators das einzige Element des Aktuators, das starr mit dem Grundgestell der Anordnung verbunden ist. Insbesondere kann der Aktuator bzw. das Antriebsglied des Aktuators beabstandet von weiteren Komponenten der Anordnung angeordnet sein, sodass es zu keinen Reibungskräften bei der Betätigung des Aktuators durch die Relativbewegung kommt. Insbesondere kann es vorteilhaft sein, die Zuführungsleitung für das Fluid in die Druckkammer durch den Grundkörper zu führen, womit flexible Leitungen entfallen können. Beispielsweise verläuft die Zuführungsleitung im Wesentlichen in Wirkrichtung des Aktuators durch den Grundkörper.

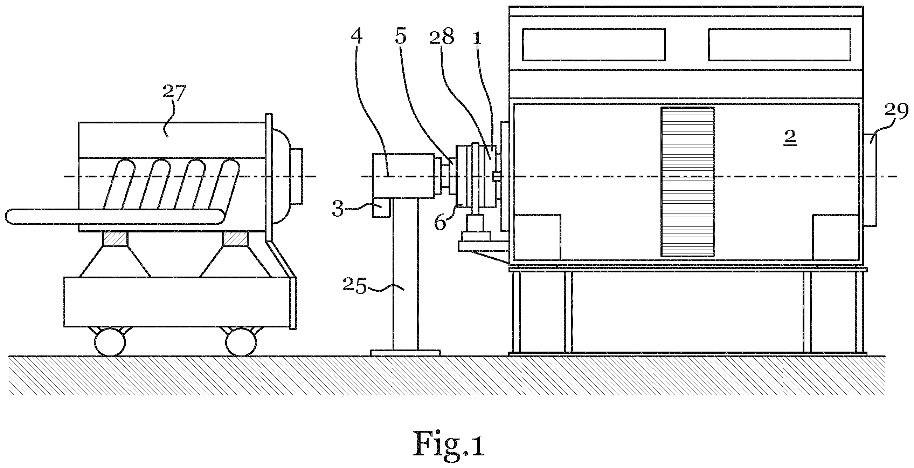

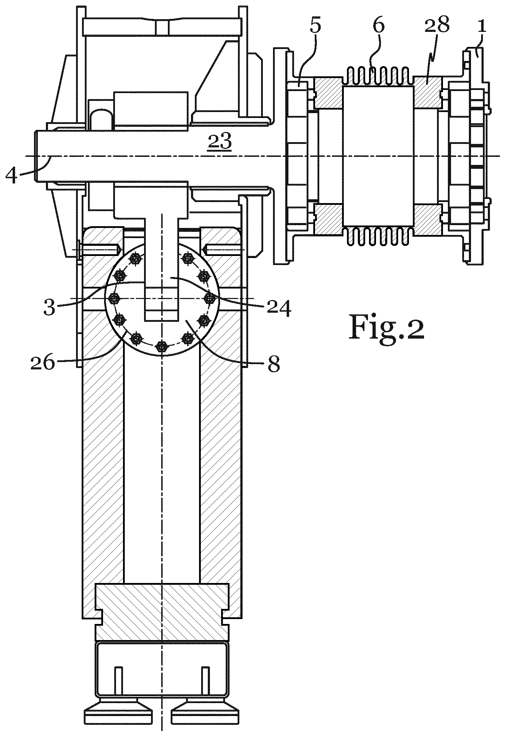

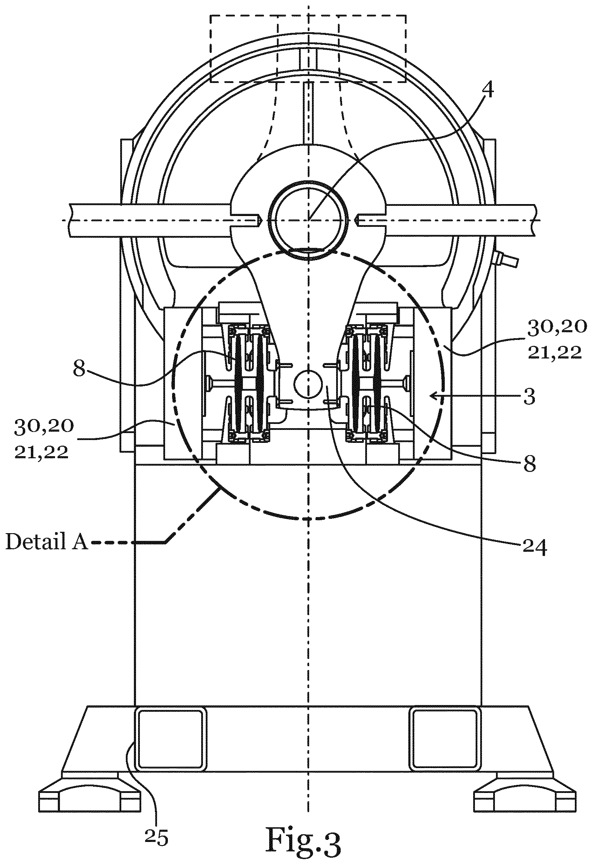

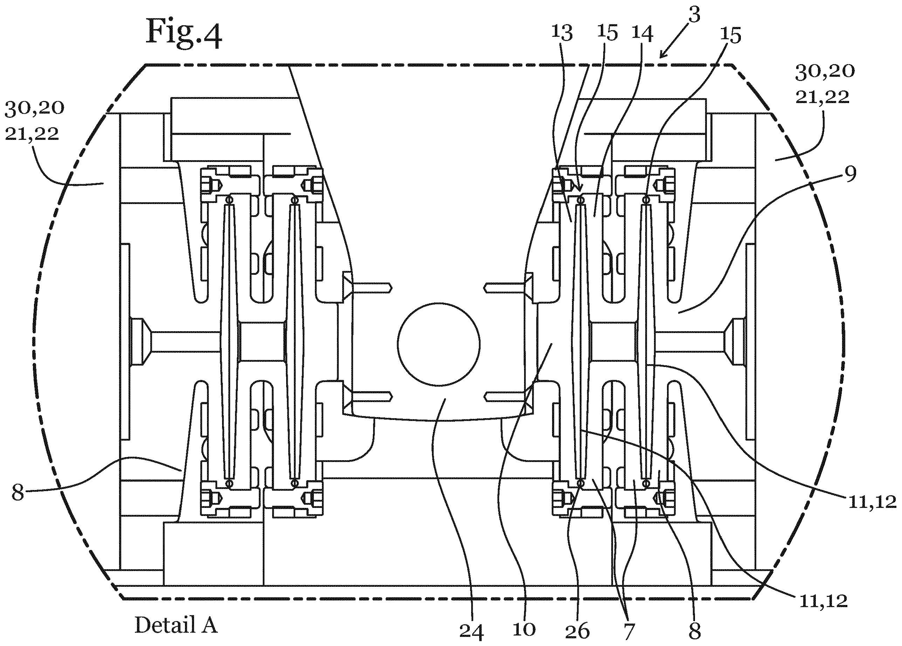

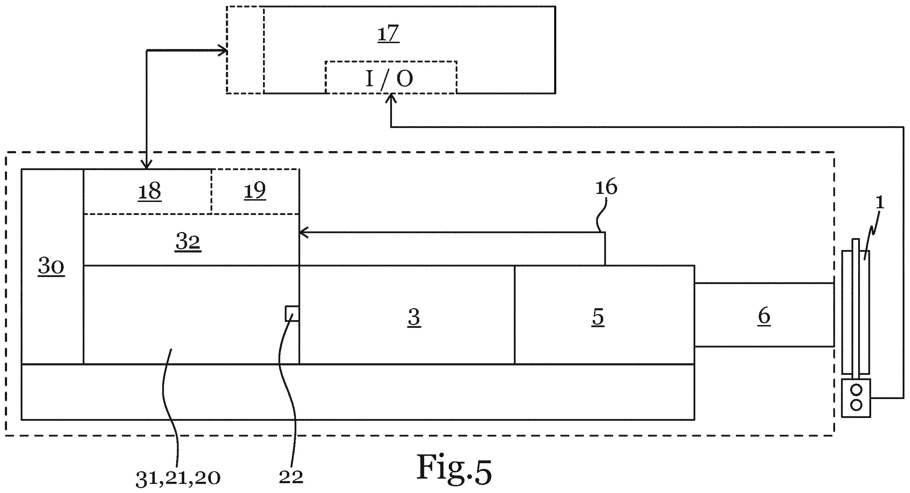

In weiterer Folge wird die Erfindung anhand konkreter, nicht einschränkender Ausführungsbeispiele und anhand der Figuren weiterbeschrieben, wobei Fig. 1 eine schematische Seitenansicht einer Anordnung und eines Prüfstands, Fig. 2 einen Schnitt der Anordnung entlang der Wirkachse, Fig. 3 einen Schnitt der Anordnung normal zur Wirkachse, Fig. 4 ein Detail aus Fig. 3 und Fig. 5 eine schematische Ansicht mit einem Regelkreis zur Regelung der Anordnung zeigen.

Wenn nicht anders angegeben, so entsprechen die Bezugszeichen folgenden Komponenten: Drehmoment-Messeinrichtung 1, Motorenprüfstand oder Prüfstand 2, Referenzmomenterzeugungseinrichtung 3, Wirkachse 4, Referenzmomentmesseinrichtung 5, Verbindungsvorrichtung 6, Antriebsglied 7, Aktuator 8, Grundkörper 9, Betätigungselement 10, Druckkammer 11, Fluid 12, erste Platte 13, zweite Platte 14, Plattenpaar 15, Regelkreis 16, Automationssystem oder Datenverarbeitungseinrichtung 17, Schnittstelle 18, Bedienpaneel 19, Druckaufbauvorrichtung 20, Fluidpumpe 21, Absperrelement 22, Referenzantriebsstrang 23, Fortsatz 24, Grundgestell 25, Kontur 26, Antriebsmaschine 27, Eingangswelle (des Prüfstandes) 28, Belastungsmaschine 29, Stromversorgung 30, Hydraulikkomponenten 31, Regelungseinrichtung 32.

Fig. 1 zeigt eine schematische Seitenansicht der Anordnung mit einem Motorenprüfstand 2, wobei statt einer Antriebsmaschine 27 eine erfindungsgemäße Anordnung mit dem Motorenprüfstand 2 gekoppelt ist. Der Motorenprüfstand 2 umfasst eine Eingangswelle 28, eine Belastungsmaschine 29, sowie eine Drehmoment-Messeinrichtung 1. Die Anordnung gemäß Fig. 1 umfasst eine Referenzmomenterzeugungseinrichtung 3, eine Referenzmomentmesseinrichtung 5, sowie eine Verbindungsvorrichtung 6. Die Verbindungsvorrichtung 6 ist dazu geeignet und/oder eingerichtet, die Anordnung mit der Drehmoment-Messeinrichtung 1 zu koppeln. Bevorzugt ist die Verbindungsvorrichtung 6 dazu geeignet und/oder eingerichtet, eine koaxiale Ausrichtung der Wirkachse 4 der Anordnung mit der Drehachse der Drehmoment-Messeinrichtung 1 zu ermöglichen. Insbesondere ist es vorteilhaft, wenn die Verbindungsvorrichtung 6 eine momentenfreie bzw. kraftfreie Verbindung zwischen der Anordnung und der Drehmoment-Messeinrichtung herstellen kann. Dazu kann die Verbindungsvorrichtung 6 eine radiale und/oder axiale Verstellmöglichkeit aufweisen. Beispielhafte Verbindungsvorrichtungen sind Lamellenkupplungen, die eigens zur Verbindung mit Prüfständen ausgebildet sind.

Die Anordnung ist insbesondere als an einen Prüfstand andockbares Modul ausgebildet. Die Anordnung umfasst bevorzugt ein Grundgestell 25, über das die Anordnung ortsfest oder fest am Maschinengestell eines Prüfstands festgelegt werden kann. So kann die Antriebsmaschine 27 zu einem gewünschten Zeitpunkt vom Prüfstand 2 getrennt werden, um die erfindungsgemäße Anordnung mit dem Prüfstand zu koppeln. Nach der Kalibrierung oder nach der Aufnahme der zur Kalibrierung notwendigen Daten kann die Anordnung wieder entfernt werden, um anschließend dieselbe oder eine andere Antriebsmaschine 27 mit dem Prüfstand 2 zu verbinden.

Fig. 2 zeigt eine schematische Schnittdarstellung einer erfindungsgemäßen Anordnung umfassend eine Referenzmomenterzeugungseinrichtung 3, eine Referenzmomentmesseinrichtung 5, sowie eine Verbindungsvorrichtung 6. Die Referenzmomenterzeugungseinrichtung 3 umfasst einen Fortsatz 24 sowie einen gegebenenfalls auf den Fortsatz 24 wirkenden Aktuator 8. Der Fortsatz 24 wirkt bevorzugt als Kurbel oder Nocke und erstreckt sich dazu zumindest abschnittsweise radial von der Wirkachse 4 der Anordnung nach außen. Durch Auftragen einer zur Wirkachse 4 tangential verlaufenden Kraft auf den Fortsatz 24 kann die lineare wirkende Referenzkraft des Aktuators 8 in ein um die Wirkachse 4 wirkendes Referenz-Drehmoment umgewandelt werden. Ausgehend von dem Aktuator 8 verläuft somit der Kraftfluss auf den Fortsatz 24, von dem Fortsatz 24 gegebenenfalls über eine Zwischenwelle zu der Referenzmomentmesseinrichtung 5 und weiter zur Verbindungsvorrichtung 6. Diese Komponenten bilden zusammen einen Referenzantriebsstrang 23. Der Fortsatz 24, die gegebenenfalls vorgesehene Zwischenwelle, die Referenzmomentmesseinrichtung 5 und die Verbindungsvorrichtung 6 sind in allen Ausführungsformen bevorzugt schwenkbar oder drehbar gegenüber dem Grundgestell oder gegenüber dem Prüfstand 2 angeordnet, um ein Drehmoment auf die Drehmoment-Messeinrichtung 1 übertragen zu können. In der Praxis ist eine Drehmomentmessung durch eine herkömmliche Drehmoment-Messeinrichtung 1 und/oder durch die herkömmliche Referenzmomentmesseinrichtung 5 oft nur dann möglich, wenn es zu einer zumindest geringfügigen Relativdrehung zweier Komponenten gegenübereinander kommt, da die Drehmomentmessung über eine Detektion einer Verdrehung zweiter Körper gegenübereinander erfolgt. Beispielhaft können Verdrehungen von bis zu 0,2° bei einem Referenz-Drehmoment von etwa 5kNm bis etwa 10kNm auftreten.

Die schematisch dargestellte Verbindungsvorrichtung 6 ist in allen Ausführungsformen bevorzugt zur koaxialen, momentenfreien und/oder kraftfreien Anordnung der Wirkachse 4 zur Drehachse des Prüfstands, insbesondere zur Drehachse der Eingangswelle 28 bzw. der Drehmoment-Messeinrichtung 1 geeignet oder eingerichtet.

Fig. 3 zeigt eine weitere schematische Schnittdarstellung, wobei die Schnittebene im Wesentlichen eine Normalebene der Wirkachse 4 der Anordnung ist, womit die Wirkachse 4 in der vorliegenden Darstellung im Wesentlichen projizierend verläuft.

Die Anordnung umfasst eine Referenzmomenterzeugungseinrichtung 3 zur Erzeugung eines Referenzdrehmoments. Die Referenzmomenterzeugungseinrichtung 3 umfasst einen Fortsatz 24. Der Fortsatz 24 wirkt insbesondere als Kurbel oder als Nocke. Die Anordnung umfasst zumindest einen Aktuator 8, der auf den Fortsatz 24 wirkt, um ein Drehmoment um die Wirkachse 4 zu erzeugen. In der vorliegenden Ausführungsform sind zwei Aktuatoren 8 vorgesehen, die wahlweise oder gleichzeitig auf gegenüberliegende Seiten des Fortsatzes 24 wirken können, um eine Wahl der Wirkrichtung und der Größe des Drehmoments treffen zu können.

Beispielsweise kann bei der vorliegenden Ansicht ein im Uhrzeigersinn wirkendes Drehmoment durch den auf der rechten Seite angeordneten Aktuator 8 und ein gegen den Uhrzeigersinn wirkendes Drehmoment durch den links angeordneten Aktuator 8 bewirkt werden. Gegebenenfalls können beide Aktuatoren auch ständig in Wirkkontakt mit dem Fortsatz 24 stehen, sodass sich die auf den Fortsatz 24 wirkende resultierende Referenzkraft durch Vektoraddition der beiden von den beiden Aktuatoren 8 ausgeübten Kräfte ergibt. Alternativ ist jeweils nur ein Aktuator 8 mit dem Fortsatz 24 in Wirkkontakt, sodass die auf den Fortsatz 24 wirkende Referenzkraft der Kraft des jeweils aktiven Aktuators 8 entspricht. Die Anordnung gemäß Fig. 3 umfasst wiederum ein Grundgestell 25, das in der vorliegenden Ausführungsform ortsfest am Boden festgelegt ist.

Fig. 4 zeigt ein Detail der Referenzmomenterzeugungseinrichtung 3 aus Fig. 3. Die Referenzmomenterzeugungseinrichtung 3 umfasst einen Fortsatz 24 und mindestens einen Aktuator 8. Der Aktuator 8 umfasst einen Grundkörper 9, ein Betätigungselement 10, sowie ein Antriebsglied 7 zur Bewegung des Betätigungselements 10 gegenüber den Grundkörper 9. Gemäß der vorliegenden Ausführungsform ist eine Druckkammer 11 vorgesehen, die mit einem Fluid 12 gefüllt ist. Das Fluid 12 ist in allen Ausführungsformen bevorzugt ein Hydraulikfluid. Durch Veränderung des Fluiddrucks in der Druckkammer 11 kann das Antriebsglied 7 verformt werden. Dazu kann das Antriebsglied 7 die funktionelle Struktur eines Membranzylinders, eines Balgzylinders oder eines Faltenbalgzylinders aufweisen.

In der vorliegenden Ausführungsform entspricht die Gestalt des Antriebsglieds 7 im Wesentlichen der funktionellen Struktur eines Doppelbalgzylinders und eines Doppelfaltenbalgzylinders. So weist der Aktuator 8 bzw. das Antriebsglied 7 eine erste Platte 13 auf. Durch Erhöhung des Fluiddrucks in der Druckkammer 11 kann beispielsweise eine Wölbung dieser ersten Platte 13 erfolgen, wodurch das Betätigungselement 10 gegenüber dem Grundkörper 9 bewegt wird und eine Referenzkraft auf den Fortsatz 24 ausübt. Gegebenenfalls kann eine zweite Platte 14 vorgesehen sein. Bevorzugt wird auch die zweite Platte 14 elastisch verformt, wenn sich der Druck in der Druckkammer 11 ändert. So kann beispielsweise durch Erhöhung des Drucks auch die zweite Platte 14 gewölbt werden, wodurch eine Verschiebung der gesamten ersten Platte und dadurch eine zusätzliche Bewegung des Betätigungselements 11 gegenüber dem Grundkörper 9 bewirkt wird.

Bevorzugt sind die erste Platte 13 und die zweite Platte 14 entlang einer geschlossenen Kontur 26 dichtend miteinander verbunden, sodass eine Druckkammer 11 gebildet ist. Diese Druckkammer 11 weist insbesondere im Bereich zwischen der ersten Platte 13 und der zweiten Platte 14 eine flache Form auf. Durch diese flache Form ist die Flächenerstreckung der Druckkammer 11 normal zur Wirkrichtung des Aktuators vergrößert, womit das Verhältnis zwischen in der Kammer herrschendem Druck und ausgeübter Kraft des Aktuators positiv beeinflusst wird. Die beiden Platten 13, 14 bilden zusammen ein Plattenpaar 15. In der vorliegenden Ausführungsform weist der Aktuator 8 bzw. das Antriebsglied 7 zwei Plattenpaare 15 auf, die seriell aneinandergereiht und insbesondere seriell entlang der Wirkrichtung des Aktuators aneinandergereiht sind. Bevorzugt erstreckt sich die Druckkammer 11 zwischen die Platten 13, 14 beider Plattenpaare 15. Gegebenenfalls ist jedoch pro Plattenpaar 15 in allen Ausführungsformen jeweils eine getrennt ansteuerbare Druckkammer 11 vorgesehen. In der vorliegenden Ausführungsform weist die Referenzmomenterzeugungseinrichtung 3 zwei Aktuatoren 8 auf, wobei die beiden Aktuatoren 8 gegebenenfalls gleich ausgestaltet sind. Durch wahlweises oder gleichzeitiges Betätigen der Aktuatoren 8 kann die Richtung und die Größe des durch den Fortsatz 24 erzeugten Referenzdrehmoments gewählt werden.

Fig. 5 zeigt eine schematische Ansicht von Komponenten der Anordnung sowie einen Regelkreis 16 zur Regelung der Anordnung und insbesondere zur Regelung des Referenz-Drehmoments. Die Anordnung ist bevorzugt modular ausgebildet und umfasst gegebenenfalls alle Komponenten, die innerhalb des strichlierten Rechtecks der Fig. 5 angeordnet sind. Insbesondere umfasst die Anordnung eine Referenzmomenterzeugungseinrichtung 3, eine Referenzmomentmesseinrichtung 5 und eine Verbindungsvorrichtung 6. Die Verbindungsvorrichtung 6 ist dazu eingerichtet, eine Verbindung bzw. eine Kopplung mit der zu kalibrierenden Drehmoment-Messeinrichtung 1 herzustellen.

Die Anordnung umfasst bevorzugt in allen Ausführungsformen Hydraulikkomponenten 31, wie beispielsweise eine Druckaufbauvorrichtung 20 mit einer Fluidpumpe 21 und einem Absperrelement 22 zum Aufbau des Fluiddrucks in der Druckkammer. Bevorzugt umfasst die Anordnung auch eine Stromversorgung 30.

Bevorzugt sind auch eine Datenverarbeitungseinrichtung 17, eine Schnittstelle 18 und ein Bedienpaneel 19 vorgesehen.

Bei Betätigung der Referenzmomenterzeugungseinrichtung 3 wird ein Referenzdrehmoment erzeugt. Dieses Referenzdrehmoment wird einerseits von der Referenzmomentmesseinrichtung 5 gemessen und andererseits durch die Verbindungsvorrichtung 6 auf die Drehmoment-Messeinrichtung 1 übertragen. Um nun zur Kalibrierung ein gewünschtes Drehmoment auf die Drehmoment-Messeinrichtung 1 zu übertragen, ist bevorzugt in allen Ausführungsformen ein Regelkreis 16 vorgesehen. Der Regelkreis 16 umfasst eine Regelungseinrichtung 32. Das gewünschte Referenzdrehmoment bildet bevorzugt die Führungsgröße bzw. den SollWert des Regelkreises. Als Stellgröße oder Steuergröße dient bevorzugt ein Signal zur Veränderung des Drucks in einer oder in der Druckkammer oder in mehreren Druckkammern. Insbesondere ist ein Absperrelement 22 vorgesehen, durch dessen Steuerung oder Regelung der Fluiddruck des Fluids 12 in der Druckkammer 11 gesteuert oder geregelt werden kann. Das durch den Druck in der Druckkammer 11 veränderte Referenzdrehmoment wird durch die Referenzmomentmesseinrichtung 5 gemessen, wobei ein Signal der Referenzmomentmesseinrichtung 5 bevorzugt als Ist-Wert im Regelkreis 16 rückgeführt wird, um eine Regelung des von der Referenzmomentmesseinrichtung 5 gemessen Drehmoments auf das gewünschte Drehmoment zu bewirken.

In einer Datenverarbeitungseinrichtung 17, die insbesondere ein Teil des Prüfstands 2 oder ein Teil der vorliegenden Anordnung sein kann, werden die Messdaten der Drehmoment-Messeinrichtung 1 gegebenenfalls gespeichert und/oder mit den Drehmoment-Messdaten der Referenzmomentmesseinrichtung 5 verglichen, um die gewünschte Kalibrierung der Drehmoment-Messeinrichtung 1 vornehmen zu können.

Gemäß einer weiteren Ausführungsform kann die Referenzmomenterzeugungseinrichtung 3 einen weiteren Fortsatz 24 und einen oder mehrere weitere Aktuatoren 8 umfassen, wobei der zweite Fortsatz 24 im Wesentlichen 180° um die Wirkachse verdreht angeordnet ist. Durch Auftragen zweier Kräfte an gegenüberliegenden Fortsätzen 24 können Querkräfte verringert und die Kalibriergenauigkeit verbessert werden. Diese Ausführungsform kann optional vorgesehen sein und ist in Fig. 3 strichliert eingezeichnet.

Allgemein wird angemerkt, dass die Erfindung insbesondere durch die Merkmale der Patentansprüche bestimmt und keinesfalls auf die angeführten Ausführungsbeispiele eingeschränkt ist. Gegebenenfalls sind die Ausführungsformen der Fig.1 bis 5 unterschiedliche Ausführungsformen. Gegebenenfalls zeigen die Ausführungsformen der Fig.1 bis 5 alle dieselbe Ausführungsform.

## Patentansprüche

1. Anordnung zum Kalibrieren einer Drehmoment-Messeinrichtung (1) eines Kraftfahrzeugprüfstandes oder Motorenprüfstandes (2) umfassend:
- eine Referenzmomenterzeugungseinrichtung (3) zur Erzeugung eines um eine Wirkachse (4) wirkenden Referenz-Drehmoments,
- eine Referenzmomentmesseinrichtung (5) zur Messung des um die Wirkachse (4) wirkenden Referenz-Drehmoments,
- und eine Verbindungsvorrichtung (6) zur Verbindung oder Drehverbindung der Anordnung mit der Drehmoment-Messeinrichtung (1) und zur Übertragung des Referenz-Drehmoments auf die Drehmoment-Messeinrichtung (1),
**dadurch gekennzeichnet, dass**
die Referenzmomenterzeugungseinrichtung (3) mindestens einen anfahrhaftreibungsfrei betätigbaren Aktuator (8) mit einem anfahrhaftreibungsfrei betätigbaren Antriebsglied (7) zur Erzeugung einer Referenzkraft aufweist, wobei die Referenzmomenterzeugungseinrichtung (3) mindestens einen um die Wirkachse (4) als Kurbel oder Nocke wirkenden Fortsatz (24) umfasst, und dass die Referenzkraft des Aktuators (8) zur Erzeugung des Referenz-Drehmoments beabstandet von der Wirkachse (4) auf den Fortsatz (24) wirkt.

2. Anordnung nach Anspruch 1,
**dadurch gekennzeichnet, dass**
der Aktuator (8) der Referenzmomenterzeugungseinrichtung (3) einen Grundkörper (9), ein Betätigungselement (10) und mindestens ein anfahrhaftreibungsfrei betätigbares Antriebsglied (7) zur Bewegung des Betätigungselements (10) gegenüber dem Grundkörper (9) und zur Erzeugung der Referenzkraft durch elastisches Verformen des Antriebsglieds (7) umfasst.

3. Anordnung nach Anspruch 1 oder 2,
**dadurch gekennzeichnet, dass**
der Aktuator (8) eine auf das Antriebsglied (7) wirkende Druckkammer (11) umfasst, und dass in der Druckkammer (11) ein Fluid (12), insbesondere ein Hydraulikfluid, mit steuerbarem oder regelbarem Fluiddruck zur elastischen Verformung des Antriebsglieds (7) und zur Betätigung des Aktuators (8) vorgesehen ist.

4. Anordnung nach einem der Ansprüche 1 bis 3,
**dadurch gekennzeichnet, dass**
der Aktuator (8) oder das Antriebsglied (7) die funktionelle Struktur eines Membranantriebs, eines Membranzylinders, eines einfachen Balgzylinders, eines Doppelbalgzylinders, eines Mehrfachbalgzylinders oder eines Faltenbalgzylinders aufweist, wobei die der funktionellen Struktur der Membran(en) oder des Balgs entsprechenden Komponenten aus einem elastisch verformbaren aber festen und formstabilen Werkstoff wie Metall oder Stahl gebildet ist oder sind.

5. Anordnung nach einem der Ansprüche 3 und 4,
**dadurch gekennzeichnet, dass**
das Antriebsglied (7) mindestens eine elastisch verformbare erste Platte (13) umfasst, wobei die erste Platte (13) die Druckkammer (11) zumindest teilweise begrenzt und wobei die Form der ersten Platte (13) und der Druckkammer (11) zur Betätigung des Aktuators (8) durch Veränderung des Fluiddrucks in der Druckkammer (11) veränderbar ist.

6. Anordnung nach einem der Ansprüche 3 bis 5,
**dadurch gekennzeichnet, dass**
das Antriebsglied eine elastisch verformbare erste Platte (13) und eine elastisch verformbare zweite Platte (14) umfasst, wobei die beiden Platten zusammen ein Plattenpaar (15) bilden, dass die erste Platte (13) und die zweite Platte (14) entlang einer geschlossenen Kontur (26) dichtend miteinander verbunden sind, dass die erste Platte (13) und die zweite Platte (14) die Druckkammer (11) derart begrenzen, dass sich die Druckkammer (11) zwischen die erste Platte (13) und die zweite Platte (14) erstreckt, und dass die Form der ersten Platte (13), der zweiten Platte (14) und der Druckkammer (11) zur Betätigung des Aktuators (8) durch Veränderung des Fluiddrucks in der Druckkammer (11) veränderbar ist.

7. Anordnung nach einem der Ansprüche 3 bis 5,
**dadurch gekennzeichnet, dass**
das Antriebsglied eine elastisch verformbare erste Platte (13) und eine elastisch verformbare zweite Platte (14) umfasst, wobei die beiden Platten zusammen ein Plattenpaar (15) bilden, dass die erste Platte (13) und die zweite Platte (14) entlang einer geschlossenen Kontur (16) dichtend miteinander verbunden sind, dass die erste Platte (13) und die zweite Platte (14) die Druckkammer (11) derart begrenzen, dass sich die Druckkammer (11) zwischen die erste Platte (13) und die zweite Platte (14) erstreckt, dass die Form der ersten Platte (13), der zweiten Platte (14) und der Druckkammer (11) zur Betätigung des Aktuators (8) durch Veränderung des Fluiddrucks in der Druckkammer (11) veränderbar ist, dass der zwischen der ersten Platte (13) und der zweiten Platte (14) angeordnete Abschnitt der Druckkammer (11) flach ausgebildet ist und entlang des Verlaufs der Platten (13, 14) eine größere Abmessung aufweist als quer oder normal zum Verlauf der Platten (13, 14), und dass dadurch die funktionelle Struktur eines Balgzylinders, insbesondere die funktionelle Struktur eines einfachen Balgzylinders oder eines einfachen Faltenbalgzylinders gebildet ist.

8. Anordnung nach einem der Ansprüche 1 bis 7,
**dadurch gekennzeichnet, dass**
das Antriebsglied eine elastisch verformbare erste Platte (13) und eine elastisch verformbare zweite Platte (14) umfasst, wobei die beiden Platten zusammen ein Plattenpaar (15) bilden, dass die erste Platte (13) und die zweite Platte (14) entlang einer geschlossenen Kontur (16) dichtend miteinander verbunden sind, dass die erste Platte (13) und die zweite Platte (14) die Druckkammer (11) derart begrenzen, dass sich die Druckkammer (11) zwischen die erste Platte (13) und die zweite Platte (14) erstreckt, dass die Form der ersten Platte (13), der zweiten Platte (14) und der Druckkammer (11) zur Betätigung des Aktuators (8) durch Veränderung des Fluiddrucks in der Druckkammer (11) veränderbar ist, dass der Aktuator zwei oder mehr Plattenpaare (15) umfasst, die jeweils einen Abschnitt der Druckkammer (11) umgeben, dass die Plattenpaare (15) quer zum Verlauf der Platten (13, 14) seriell aneinandergereiht sind, und dass dadurch die funktionelle Struktur eines Balgzylinders, insbesondere die funktionelle Struktur eines Doppelbalgzylinders, eines Mehrfachbalgzylinders oder eines Faltenbalgzylinders gebildet ist.

9. Anordnung nach einem der Ansprüche 3 bis 8,
**dadurch gekennzeichnet, dass**
ein Regelkreis (16) zur Regelung des Referenz-Drehmoments vorgesehen ist,
- wobei die Führungsgröße oder der Sollwert ein wählbarer oder von einer Kalibrierkurve vorgegebener Drehmomentwert ist,
- wobei der im Regelkreis (16) rückgeführte Ist-Wert ein von der Referenzmomentmesseinrichtung (5) gemessener Wert, und insbesondere das gemessene Drehmoment ist,
- und wobei die Stellgröße oder die Steuergröße ein Signal zur Veränderung des Drucks in einer oder in der Druckkammer (11) ist.

10. Anordnung nach einem der Ansprüche 3 bis 9,
**dadurch gekennzeichnet, dass**
zur Steuerung oder Regelung des Fluiddrucks der Druckkammer (11) eine Druckaufbauvorrichtung (20), wie insbesondere eine Fluidpumpe (21) und ein Absperrelement (22), vorgesehen ist.

11. Anordnung nach einem der Ansprüche 3 bis 10,
**dadurch gekennzeichnet, dass**
zur Steuerung oder Regelung des Fluiddrucks der Druckkammer (11) eine Druckaufbauvorrichtung (20), wie insbesondere eine Fluidpumpe (21) und ein Absperrelement (22), vorgesehen ist, und dass das Absperrelement (22) als über Pulsweitenmodulation angesteuertes Digitalventil ausgebildet ist.

12. Anordnung nach einem der Ansprüche 3 bis 11,
**dadurch gekennzeichnet, dass**
ein Regelkreis (16) zur Regelung des Referenz-Drehmoments vorgesehen ist,
- wobei die Führungsgröße (17) oder der Sollwert (17) ein wählbarer oder von einer Kalibrierkurve vorgegebener Drehmomentwert ist,
- wobei der im Regelkreis (16) rückgeführte Ist-Wert (18) ein von der Referenzmomentmesseinrichtung (5) gemessener Wert, und insbesondere das gemessene Drehmoment ist,
- und wobei die Stellgröße (19) oder die Steuergröße (19) ein Signal zur Veränderung des Drucks in einer oder in der Druckkammer (11) ist,
dass die Anordnung und der Aktuator (8) einen ersten Zustand aufweisen, bei dem ein erstes Referenz-Drehmoment auf die Drehmoment-Messeinrichtung (1) übertragen ist,
dass die Anordnung und der Aktuator einen zweiten Zustand aufweisen, bei dem ein zweites Referenz-Drehmoment auf die Drehmoment-Messeinrichtung (1) übertragen ist,
und dass das Referenz-Drehmoment beim Übergang zwischen dem ersten Zustand auf den zweiten Zustand zu jedem Zeitpunkt zwischen dem ersten Referenz-Drehmoment und dem zweiten Referenz-Drehmoment liegt.

13. Anordnung nach einem der Ansprüche 1 bis 12,
**dadurch gekennzeichnet, dass**
ein Referenzantriebsstrang (23) vorgesehen ist, und dass die Referenzmomenterzeugungseinrichtung (3), die Referenzmomentmesseinrichtung (5) und die Verbindungsvorrichtung (6) nacheinander entlang des vom Aktuator (8) ausgehenden Kraftflusses am Referenzantriebsstrang (23) angeordnet sind.

14. Anordnung nach einem der Ansprüche 1 bis 13,
**dadurch gekennzeichnet, dass**
die Referenzmomenterzeugungseinrichtung (3) mindestens einen um die Wirkachse (4) als Kurbel oder Nocke wirkenden Fortsatz (24) umfasst, und dass die Referenzmomenterzeugungseinrichtung (3) zwei anfahrhaftreibungsfrei betätigbare Aktuatoren (8) umfasst, deren Referenzkräfte zur Wahl der Wirkrichtung des Referenz-Drehmoments wahlweise oder gleichzeitig beabstandet von der Wirkachse (4) auf gegenüberliegende Seiten des Fortsatzes (24) wirken.

15. Anordnung nach einem der Ansprüche 1 bis 14,
**dadurch gekennzeichnet, dass**
die Referenzmomenterzeugungseinrichtung (3) zwei um die Wirkachse (4) als Kurbeln oder Nocken wirkende Fortsätze (24) umfasst, wobei die Fortsätze (24) etwa 180° um die Wirkachse (4) zueinander verdreht angeordnet sind, dass die Referenzmomenterzeugungseinrichtung (3) vier anfahrhaftreibungsfrei betätigbare Aktuatoren (8) umfasst, deren Referenzkräfte zur Wahl der Wirkrichtung des Referenz-Drehmoments jeweils paarweise beabstandet von der Wirkachse (4) auf die beiden Fortsätze (24) wirken.

16. Anordnung nach einem der Ansprüche 1 bis 15,
**dadurch gekennzeichnet, dass**
die Anordnung als mit der Drehmoment-Messeinrichtung (1) des Kraftfahrzeugprüfstandes oder des Motorenprüfstandes (2) koppelbares Modul ausgebildet ist, wobei ein Grundgestell (25) zur ortsfesten Festlegung oder zur Festlegung an einer Komponente des Kraftfahrzeugprüfstandes oder des Motorenprüfstandes (2) vorgesehen ist.

17. Anordnung nach einem der Ansprüche 1 bis 16,
**dadurch gekennzeichnet, dass**
die Verbindungsvorrichtung (6) als koaxial und im Wesentlichen momentfrei und kraftfrei mit der Drehmoment-Messeinrichtung (1) koppelbare Verbindungsvorrichtung (6), insbesondere als Kupplung oder Lamellenkupplung mit radialer und/oder axialer Verstellmöglichkeit ausgebildet ist.

## Claims

1. Arrangement for calibrating a torque measurement means (1) of a motor vehicle test stand or an engine test stand (2), comprising:
- a reference torque generation means (3) for generating a reference torque acting around an active axis (4),
- a reference torque measurement means (5) for measuring the reference torque acting around the active axis (4),
- and a connection device (6) for the connection or the rotary connection of the arrangement with the torque measurement means (1) and for the transmission of the reference torque to the torque measuring means (1),
**characterized in that**
the reference torque generation means (3) has at least one actuator (8), adapted to be operated without static friction on start-up, having a drive member (7) for generating a reference force, said member being adapted to be operated without static friction on start-up, the reference torque generation means (3) comprising at least one protrusion (24) acting as a crank or cam around the active axis (4), and **in that**, for the generation of the reference torque, the reference force of the actuator (8) acts on the protrusion (24) at a distance from the active axis (4).

2. Arrangement of claim 1, **characterized in that** the actuator of the reference torque generation means (3) comprises a base body (9), an actuation element (10) and at least one drive member (7), adapted to be operated without static friction on start-up, for moving the actuation element (10) relative to the base body (9) and for generating the reference force by elastic deformation of the drive member (7).

3. Arrangement of claim 1 or 2, **characterized in that** the actuator (8) comprises a pressure chamber (11) acting on the drive member (7), and **in that**, in the pressure chamber (11), a fluid (12), in particular a hydraulic fluid, with controllable or regulatable fluid pressure is provided for the elastic deformation of the drive member (7) and the actuation of the actuator (8).

4. Arrangement of one of claims 1 to 3, **characterized in that** the actuator (8) or the drive member (7) has the functional structure of a membrane drive, a membrane cylinder a single bellows cylinder, a double bellows cylinder, a multi-bellows cylinder or a corrugated bellows cylinder, wherein the components corresponding to the functional structure of the membrane(s) or the bellows are made of an elastically deformable, but strong and dimensionally stable material like metal or steel.

5. Arrangement of one of claims 3 and 4, **characterized in that** the drive member (7) has at least one elastically deformable first plate (13), wherein the first plate (13) delimits the pressure chamber (11) at least in part, and wherein, for the actuation of the actuator (8), the shape of the first plate (13) and the pressure chamber (11) is changeable by changing the fluid pressure in the pressure chamber (11).

6. Arrangement of one of claims 3 to 5, **characterized in that** the drive member comprises an electrically deformable first plate (13) and an elastically deformable second plate (14), wherein the two plates together form a pair of plates (15), **in that** the first plate (13) and the second plate (14) are connected in a sealed manner along a closed contour (26), **in that** the first plate (13) and the second plate (14) delimit the pressure chamber (11) such that the pressure chamber (11) extends between the first plate (13) and the second plate (14), and **in that**, for the actuation of the actuator (8), the shape of the first plate (13), the second plate (14) and the pressure chamber (11) is changeable by changing the fluid pressure in the pressure chamber (11).

7. Arrangement of one of claims 3 to 5, **characterized in that** the drive member comprises an electrically deformable first plate (13) and an elastically deformable second plate (14), wherein the two plates together form a pair of plates (15), **in that** the first plate (13) and the second plate (14) are connected in a sealed manner along a closed contour (26), **in that** the first plate (13) and the second plate (14) delimit the pressure chamber (11) such that the pressure chamber (11) extends between the first plate (13) and the second plate (14), and **in that**, for the actuation of the actuator (8), the shape of the first plate (13), the second plate (14) and the pressure chamber (11) is changeable by changing the fluid pressure in the pressure chamber (11), **in that** the section of the pressure chamber (11) arranged between the first plate (13) and the second plate (14) is flat in shape and has a larger dimension along the extension of the plates (13, 14) than in a direction transverse or normal to the extension of the plates (13, 14), and **in that** the functional structure of a bellows cylinder, in particular the functional structure of a single bellows cylinder or a single corrugated bellows cylinder is formed thereby.

8. Arrangement of one of claims 1 to 7, **characterized in that** the drive member comprises an electrically deformable first plate (13) and an elastically deformable second plate (14), wherein the two plates together form a pair of plates (15), **in that** the first plate (13) and the second plate (14) are connected in a sealed manner along a closed contour (26), **in that** the first plate (13) and the second plate (14) delimit the pressure chamber (11) such that the pressure chamber (11) extends between the first plate (13) and the second plate (14), and **in that**, for the actuation of the actuator (8), the shape of the first plate (13), the second plate (14) and the pressure chamber (11) is changeable by changing the fluid pressure in the pressure chamber (11), **in that** the actuator comprises two or more pairs of plates (15) each surrounding a section of the pressure chamber (11), **in that** the pairs of plates (15) are serially juxtaposed in a direction transverse to the extension of the plates (13, 14), and **in that** the functional structure of a bellows cylinder, in particular the functional structure of a double bellows cylinder, a multi-bellows cylinder or a corrugated bellows cylinder is formed thereby.

9. Arrangement of one of claims 3 to 8, **characterized in that** a control circuit (16) is provided for controlling the reference torque,
- wherein the reference value or the set value is a selectable torque value or a torque value predetermined by a calibration curve,
- wherein the actual value fed back in the control circuit (16) is a value measured by the reference moment measurement means (5), and in particular is the measured torque,
- and wherein the actuating variable or the control variable is a signal for changing the pressure in a or in the pressure chamber (11).

10. Arrangement of one of claims 3 to 9, **characterized in that** a pressure buildup device (20), such as in particular a fluid pump (21) and a shut-off element (22), is provided for controlling or regulating the fluid pressure of the pressure chamber (11).

11. Arrangement of one of claims 3 to 10, **characterized in that** a pressure buildup device (20), such as in particular a fluid pump (21) and a shut-off element (22), is provided for controlling or regulating the fluid pressure of the pressure chamber (11), and **in that** the shut-off element (22) is designed as a digital valve controlled by pulse width modulation.

12. Arrangement of one of claims 3 to 11, **characterized in that** a control circuit (16) is provided for controlling the reference torque,
- wherein the reference value or the set value is a selectable torque value or a torque value predetermined by a calibration curve,
- wherein the actual value fed back in the control circuit (16) is a value measured by the reference moment measurement means (5), and in particular is the measured torque,
- and wherein the actuating variable or the control variable is a signal for changing the pressure in a or in the pressure chamber (11),
**in that** the arrangement and the actuator (8) have a first state in which a first reference torque is transmitted to the torque measurement means (1),
**in that** the arrangement and the actuator have a second state in which a second reference torque is transmitted to the torque measurement means (1),
and **in that**, at any time during the transition from the first stet to the second state, the reference torque is between the first reference torque and the second reference torque.

13. Arrangement of one of claims 1 to 12, **characterized in that** a reference drive train (23) is provided, and **in that** the reference torque generation means (3), the reference torque measurement means (5) and the connection device (6) are sequentially arranged at the reference drive train (23) along the force flow originating from the actuator (8).

14. Arrangement of one of claims 1 to 13, **characterized in that** the reference torque generation means (3) comprises at least one protrusion (24) acting as a crank or cam around the active axis (4), and **in that** the reference torque generation means (3) comprises two actuators (8), adapted to be operated without static friction on start-up, whose reference forces act selectively or simultaneously at a distance of the effective axis (4) on opposite of the protrusion (24) to choose the effective direction of the reference torque.

15. Arrangement of one of claims 1 to 14, **characterized in that** the reference torque generation means (3) comprises two protrusions (24) acting as cranks or cams around the active axis (4), wherein the protrusions (24) are arranged rotated by about 180° with respect to each other around the active axis (4), **in that** the reference torque generation means (3) comprises four actuators (8), adapted to be operated without static friction on start-up, whose reference forces act in pairs at a distance of the effective axis (4) on the two protrusions (24) to choose the effective direction of the reference torque.

16. Arrangement of one of claims 1 to 15, **characterized in that** the arrangement is configured as a module adapted to be coupled with the torque measurement means (1) of the vehicle test stand or the engine test stand (2), wherein a base frame (25) is provided for stationary fixation or for fixation on a component of the vehicle test stand or the engine test stand (2).

17. Arrangement of one of claims 1 to 16, **characterized in that** the connection device (6) is configured as a connection device (6) adapted to be coupled to the torque measurement mean (1) in a manner coaxial and substantially free of moments and free of forces, in particular as a clutch or a multi-plate clutch with radial and/or axial adjustability.

## Revendications

1. Agencement pour calibrer un dispositif de mesure de couple (1) d'un banc d'essai de véhicule automobile ou d'un banc d'essai de moteur (2) comprenant:
- un dispositif générateur de couple de référence (3) pour générer un couple de référence agissant autour d'un axe actif (4),
- un dispositif de mesure de couple de référence (5) pour mesurer le Couple de référence agissant autour de l'axe actif (4),
- et un dispositif de liaison (6) pour la liaison ou la liaison en rotation de l'agencement avec le dispositif de mesure de couple (1) et pour la transmission du couple de référence au dispositif de mesure de couple (1),
**caractérisé en ce que**
le dispositif générateur de couple de référence (3) comporte au moins un actionneur (8) pouvant être actionné sans friction de démarrage et comportant un organe d'entraînement (7) pouvant être actionné sans friction de démarrage, afin de générer un effort de référence, le dispositif générateur de couple de référence (3) comportant au moins une projection (24) agissant autour de l'axe actif (4) comme manivelle ou came, et **en ce que**, pour générer le couple de référence, la force de référence de l'actionneur (8) agit sur la projection (24), espacée de l'axe actif (4).

2. Agencement selon la revendication 1, **caractérisé en ce que** l'actionneur (8) du dispositif générateur de couple de référence (3) comporte un corps de base (9), un élément d'actionnement (10) et au moins un élément d'entraînement (7) pouvant être actionné sans friction de démarrage, pour déplacer l'élément d'actionnement (10) par rapport au corps de base (10) et pour générer la force de référence en déformant élastiquement l'élément d'entraînement (7).

3. Agencement selon la revendication 1 ou 2, **caractérisé en ce que** l'actionneur (8) comporte une chambre de pression (11) agissant sur l'élément d'entraînement (7) et **en ce que** la chambre de pression (11) contient un fluide (12), en particulier un fluide hydraulique, à pression de fluide contrôlable ou réglable pour la déformation élastique dudit élément d'entraînement (7) et pour l'actionnement de l'actionneur (8).

4. Agencement selon l'une des revendications 1 à 3, **caractérisé en ce que** l'actionneur (8) ou l'élément d'entraînement (7) comporte la structure fonctionnelle d'un entraînement à diaphragme, d'un cylindre à diaphragme, d'un vérin à simple soufflet, d'un vérin à double soufflet, d'un vérin à multiple soufflets ou d'un vérin de type guêtre, dans lequel les composants correspondant à la structure fonctionnelle de diaphragme(s) ou de soufflet sont formés d'un matériau élastiquement déformable mais solide et stable, tel que le métal ou l'acier.

5. Agencement selon l'une des revendications 3 et 4, **caractérisé en ce que** l'élément d'entraînement (7) comprend au moins une première plaque (13) élastiquement déformable, la première plaque (13) définissant au moins partiellement la chambre de pression (11), et la forme de la première plaque (13) et de la chambre de pression (11) étant variable pour permettre d'actionner l'actionneur (8) en modifiant la pression du fluide dans la chambre de pression (11).

6. Agencement selon l'une des revendications 3 à 5, **caractérisé en ce que** l'élément d'entraînement comprend une première plaque (13) élastiquement déformable et une seconde plaque (14) élastiquement déformable, dans lequel les deux plaques forment ensemble une paire de plaques (15), **en ce que** la première plaque (13) et la seconde plaque (14) sont reliées de manière étanche le long d'un contour fermé (26), **en ce que** la première plaque (13) et la seconde plaque (14) définissent la chambre de pression (11) de sorte que la chambre de pression (11) s'étend entre la première plaque (13) et la deuxième plaque (14), et que la forme de la première plaque (13), de la deuxième plaque (14) et de la chambre de pression (11) est variable pour actionner l'actionneur (8) en modifiant la pression du fluide dans la chambre de pression (11).

7. Agencement selon l'une des revendications 3 à 5, **caractérisé en ce que** l'élément d'entraînement comprend une première plaque (13) élastiquement déformable et une seconde plaque (14) élastiquement déformable, dans lequel les deux plaques forment ensemble une paire de plaques (15), **en ce que** la première plaque (13) et la seconde plaque (14) sont reliées de manière étanche le long d'un contour fermé (16), **en ce que** la première plaque (13) et la seconde plaque (14) définissent la chambre de pression (11) de sorte que la chambre de pression (11) s'étend entre la première plaque (13) et la deuxième plaque (14), **en ce que** la forme de la première plaque (13), de la deuxième plaque (14) et de la chambre de pression (11) est variable pour actionner l'actionneur (8) en modifiant la pression du fluide dans la chambre de pression (11), **en ce qu'**une partie de la chambre de pression (11), agencée entre la première plaque (13) et la deuxième plaque (14), est formée à plat et a une plus grande dimension le long de l'étendu des plaques (13, 14) que dans la direction transversale ou normale à l'étendu des plaques (13, 14), et **en ce que** la structure fonctionnelle d'un vérin à soufflet, en particulier la structure fonctionnelle d'un vérin à simple soufflet ou d'un vérin a simple guêtre est ainsi formée.

8. Agencement selon l'une des revendications 1 à 7, **caractérisé en ce que** l'élément d'entraînement comprend une première plaque (13) élastiquement déformable et une seconde plaque (14) élastiquement déformable, dans lequel les deux plaques forment ensemble une paire de plaques (15), **en ce que** la première plaque (13) et la seconde plaque (14) sont reliées de manière étanche le long d'un contour fermé (16), **en ce que** la première plaque (13) et la seconde plaque (14) définissent la chambre de pression (11) de sorte que la chambre de pression (11) s'étend entre la première plaque (13) et la deuxième plaque (14), **en ce que** la forme de la première plaque (13), de la deuxième plaque (14) et de la chambre de pression (11) est variable pour actionner l'actionneur (8) en modifiant la pression du fluide dans la chambre de pression (11), que l'actionneur comprend deux paires de plaques (15) ou plus, entourant chacune une partie de la chambre de pression (11), **en ce que** les paires de plaques (15) sont alignées en série transversalement à l'étendu des plaques (13, 14), et **en ce que** la structure fonctionnelle d'un vérin à soufflet, en particulier la structure fonctionnelle d'un vérin à double soufflet, d'un vérin à multiples soufflets ou d'un vérin à guêtre est ainsi formée.

9. Agencement selon l'une des revendications 3 à 8, **caractérisé en ce qu'**un circuit de réglage (16) est prévu pour régler le couple de référence,
- la variable de référence ou la valeur souhaitée étant une valeur sélectionnable ou prédéterminée par une courbe de calibration,
- la valeur réelle retournée dans le circuit de réglage (16) étant une valeur mesurée par le dispositif de mesure de couple de référence (5), et en particulier le couple mesuré,
- et la variable manipulée ou la variable de commande étant un signal permettant de modifier la pression dans une ou dans la chambre de pression (11).

10. Agencement selon l'une des revendications 3 à 9, **caractérisé en ce qu'**il est prévu un dispositif d'accumulation de pression (20), en particulier une pompe à fluide (21) et un élément d'arrêt (22) pour commander ou régler la pression du fluide dans la chambre de pression (11).

11. Agencement selon l'une des revendications 3 à 10, **caractérisé en ce que**, pour commander ou régler la pression de fluide de la chambre de pression (11), il est prévu un dispositif d'accumulation de pression (20), en particulier une pompe à fluide (21) et un élément d'arrêt (22), et **en ce que** l'élément d'arrêt (22) est conçu comme une vanne numérique commandée par modulation de largeur d'impulsion.

12. Agencement selon l'une des revendications 3 à 11, **caractérisé en ce qu'**un circuit de réglage (16) est prévu pour commander le couple de référence,
- la variable de référence (17) ou la valeur souhaitée (17) étant une valeur sélectionnable ou prédéterminée par une courbe de calibration,
- la valeur réelle retournée (18) dans le circuit de réglage (16) étant une valeur mesurée par le dispositif de mesure de couple de référence (5), et en particulier le couple mesuré,
- et la variable manipulée (19) ou la variable de commande (19) étant un signal de modification de la pression dans une ou dans la chambre de pression (11)
et **en ce que** l'agencement et l'actionneur (8) ont un premier état dans lequel un premier couple de référence est transmis au dispositif de mesure du couple (1),
**en ce que** l'agencement et l'actionneur ont un second état dans lequel un second couple de référence est transmis au dispositif de mesure de couple (1),
et **en ce que** le couple de référence, lors de la transition entre le premier état au deuxième état, est à tout moment entre le premier couple de référence et le deuxième couple de référence.

13. Agencement selon l'une des revendications 1 à 12, **caractérisé en ce qu'**un groupe motopropulseur de référence (23) est prévu, et **en ce que** le dispositif générateur de couple de référence (3), le dispositif de mesure de couple de référence (5) et le dispositif de liaison (6) sont disposés en succession le long de la sortie de l'actionneur (8) sur le groupe motopropulseur de référence (23).

14. Agencement selon l'une des revendications 1 à 13, **caractérisé en ce que** le dispositif générateur de couple de référence (3) comporte au moins une projection (24) agissant autour de l'axe actif (4), servant de manivelle ou de came, et **en ce que** le dispositif générateur de couple de référence (3) comporte deux actionneurs (8) pouvant être actionnés sans friction de démarrage, dont les forces de référence pour la sélection de la direction effective du couple de référence, agissent sélectivement ou simultanément espacées de l'axe effectif (4) sur les côtés opposés de la projection (24).

15. Agencement selon l'une des revendications 1 à 14, **caractérisé en ce que** le dispositif générateur de couple de référence (3) comprend deux projections (24) agissant autour de l'axe actif (4), servant de manivelles ou de cames, les projections (24) étant agencés en rotation l'un par rapport à l'autre à environ 180° autour de l'axe d'action (4), **en ce que** le dispositif générateur de couple de référence (3) comporte quatre actionneurs (8) pouvant être actionnés sans friction de démarrage, dont les forces de référence pour sélectionner le sens d'action du couple de référence par paires agissent sur les deux projections (24) espacées de l'axe effectif (4).

16. Agencement selon l'une des revendications 1 à 15, **caractérisé en ce que** l'agencement est formé comme un module de mesure du couple (1) du banc d'essai du véhicule automobile ou du banc d'essai du moteur (2), dans lequel un cadre de base (25) est fourni pour la fixation stationnaire ou la fixation sur un composant du banc d'essai du véhicule automobile ou du banc d'essai du moteur (2).

17. Agencement selon l'une des revendications 1 à 16, **caractérisé en ce que** le dispositif de liaison (6) est réalisé en forme d'un dispositif de liaison (6) pouvant être couplé coaxialement et pratiquement sans couple et sans force, avec le dispositif de mesure de couple (1), en particulier en forme d'un embrayage ou embrayage multidisque à ajustage radial et/ou axial.
